(19) Europäisches Patentamt
European Patent Office
Office européen des brevets

(11) **EP 4 235 399 A1**

(12) **EUROPEAN PATENT APPLICATION**

(43) Date of publication:
**30.08.2023  Bulletin 2023/35**

(21) Application number: **22382173.7**

(22) Date of filing: **28.02.2022**

(51) International Patent Classification (IPC):
***G06F 7/544*** (2006.01)

(52) Cooperative Patent Classification (CPC):
**G06F 7/544**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Barcelona Supercomputing Center -
Centro Nacional
de Supercomputación (BSC-CMS)
08034 Barcelona (ES)**

(72) Inventors:
• **Reggiani, Enrico
  Barcelona (ES)**
• **Unsal, Osman
  Barcelona (ES)**
• **Cristal Kestelman, Adrián
  Sant Fruitós del Bages (ES)**

(74) Representative: **Tribalyte Ideas
Gta. Quevedo 8, 6°2
28015 Madrid (ES)**

(54) **METHOD FOR THE COMPUTATION OF A NARROW BIT WIDTH LINEAR ALGEBRA
OPERATION**

(57)    The present invention relates to a method for computing a linear algebra operation of two operands or arrays comprising one or more narrow bit width elements with a digital circuit. The method uses the principle of binary segmentation to reduce the computation overhead of linear algebra operations like linear convolution and inner product of operands such as vectors with narrow bit width components. The invention is also directed to a digital circuit configured to execute the method.

Fig.1a

EP 4 235 399 A1

**Description**

**OBJECT OF THE INVENTION**

The present invention relates to a method for computing a linear algebra operation of two operands or arrays comprising one or more narrow bit width elements with a digital circuit. The method uses the principle of binary segmentation to reduce the computation overhead of linear algebra operations like linear convolution and inner product of operands such as vectors with narrow bit width components. The invention is also directed to a digital circuit configured to execute the method.

**BACKGROUND OF THE INVENTION**

Contemporary Internet-of-Things (IoT), edge and mobile computing applications require high-performance. This demand is fuelling a large research effort in low-power, high-performance embedded processors. Such devices, mainly constrained by power and cost, have to fulfil the performance and memory requirements of a vast collection of important application domains, such as deep learning, robotics, graph processing, and cryptography. Most of these application classes represent data as matrices and vectors, and express their computation through a set of linear algebra kernels. When targeting edge platforms, a popular approach to reduce energy demands and memory footprint requirements is to compact the data layout using a smaller data format while preserving the application accuracy.

On the one hand, expressing and computing data exploiting low-precision floating-point formats is gaining traction in the High-Performance Edge Computing (HPEC) community, as they represent a good trade-off between data size and accuracy. On the other hand, narrow fixed-point and integer data representations (i.e., byte and sub-byte) offer a better alternative in terms of Performance per Watt ratio, although they feature smaller number representations. One of the dominant applications of edge computing that leverages these compressed data formats is the Quantized Convolutional Neural Network (QCNN) inference, which exploits quantization to represent data and weights with data sizes typically ranging from eight to one bit with tolerable accuracy penalties.

Other applications belonging to important application classes for edge computing, such as graph computing and cryptography, widely rely on Boolean matrices and vectors computations to traverse a graph or to encrypt/decrypt a message. These applications would greatly benefit from hardware and software solutions capable of efficiently computing narrow integer linear algebra kernels.

Porting the computation of these applications from cloud to edge and mobile devices would enable significant improvements in terms of security, safety, and energy efficiency. However, despite their low memory and energy demands, their intrinsically high computational intensity makes the computation of these workloads challenging on highly resource-constrained devices.

Therefore, there is a demand for a lightweight and high-performance method and architecture aimed at increasing the efficiency of linear algebra and narrow integer computations on edge processors.

**DESCRIPTION OF THE INVENTION**

In a first inventive aspect, the invention provides a *method for the computation of a linear algebra operation of two operands u, v, by means of a digital circuit operatively connected to an arithmetic-logic unit; wherein the method comprises, by the digital circuit, the steps of:*

*receiving two operands u, v, composed of m, n narrow bit width elements, respectively, such that $u = [u_0, ..., u_{m-1}]$, $v = [v_0, ..., v_{n-1}]$, the elements having bit widths $b_u$, $b_v$, respectively,*
*extending the bit width of each element of the operands to a clustering bit width $c_w$ by adding zeroes to the left of the most significant bit of the element, and concatenating the elements of each operand to obtain the values U, V, of bit widths $c_w \cdot m$ and $c_w \cdot n$, respectively, wherein the clustering width fulfils the condition:*

$$c_w \geq max(b_u, b_v)$$

*feeding the values U, V, to the arithmetic-logic unit, receiving a result value W of bit width p from the arithmetic-logic unit, $W = [W_0, ..., W_{p-1}]$,*
*extracting an operation result w from the result value W, wherein the operation result w comprises one or more bits of W.*

The proposed invention relies on the principles of a mathematical technique called binary segmentation, which considerably decreases the arithmetic complexity of a linear algebra computation of operands with narrow bit width elements, while reducing the processing overhead and memory footprint of the computation.

Throughout the present document it will be understood that the method is intended to perform a linear algebra operation, preferably a vector linear convolution, an inner product, a vector reduction, a scalar-vector product, or a vector addition or subtraction, on two operands with narrow bit width elements; by operand with narrow bit width elements should be understood an array of elements, wherein each element is a narrow bit width binary integer; by narrow bit width should be understood a bit width which is smaller than the word size of the architecture of the arithmetic-logic unit.

According to the method, the digital circuit performs a series of transformations on the source operands u, v, transforms them into values U, V, and feeds them to an arithmetic-logic unit, which performs an operation on the values U, V, preferably a multiplication or an addition, yielding a result value W. The result value W is further transformed to extract the result of the operation, w; preferably, the extraction comprises outputting a set of bits of the result value W, for example, by means of a masking operation. Each operation requires a specific pre-processing of the operands and a specific extraction process, as will be explained below.

The digital circuit should be understood as any hardware element capable of performing the transformations of the operands and values required by the method; preferably, the digital circuit is configured to be connected to a known computing system. In particular, the digital circuit is preferably configured to receive and output operands or values from any data storage means, which in a preferred example are the registers of a computer's processing unit. Also preferably, the digital circuit is connectable, directly or through other elements, to the arithmetic-logic unit of a computer's processing unit. In other embodiments, the digital circuit is configured to be connected to digital circuits capable of storing data and to digital circuits capable of multiplying and/or adding two binary operands.

In a particular embodiment, *the value W from the arithmetic-logic unit is obtained by multiplying, or adding the values U and V.*

The most common linear algebra operations can be reduced to two basic computations, namely, multiplication and addition. Advantageously, binary segmentation allows to reduce the linear algebra operations of arrays of elements, which normally would require several computation cycles for each element of the array, to a multiplication or addition of only two values, thus reducing the number of cycles necessary to complete the computation.

Moreover, the method allows for the computation of three very significant operations on vectors, namely linear convolution, inner product and vector reduction. Generally, the linear convolution of two vectors is computed as follows:

$$w_k = \sum_{i=0}^{K} u_i v_{k-i} \, ; k = 0, 1, \dots, K - 1$$

While the inner product is computed as follows:

$$IP = \sum_{i=0}^{m-1} u_i v_i$$

Finally, the vector reduction returns a scalar value holding the sum between all the elements of u; in a way, the vector reduction is a variant of the inner product of the vector to be reduced with a vector of ones v = [$v_0$, ..., $v_{n-1}$ ] = [1, ...,1], as follows:

$$VR = \sum_{i=0}^{n-1} u_i$$

However, in conventional computations, array operations are computing intensive, and require substantial processing cycles and use of memory for storage of intermediate results. This is avoided thanks to the present method implementation of binary segmentation, which requires the extension of each element of the array, for example, of each component of a vector, to a certain size, the clustering width, $c_w$; the extension is performed by adding zeroes to the left of the most significant bit, thus the value of the integers does not change, whereas the subsequent concatenation of the $c_w$-normalized elements produces a value, U or V which can be processed by the arithmetic-logic unit without loss of information.

In a particular embodiment, *the clustering width fulfils the condition:*

$$c_w \geq b_u + b_v + log_2(max(m,n)).$$

The clustering width for the computation of linear convolution, inner product and vector reduction is obtained according to the bit width of the elements of the operands, $b_u$, $b_v$, and the number of elements of each operand, m, n. This process provides a clustering width which is defined to be greater than the actual bit width of the input elements, $b_u$, $b_v$, as it includes extra guard-band bits to avoid overflows in the segmented data due to carry propagation. This allows performing the summation or multiplication of n narrow integers with only one summation or multiplication of two long integers, instead of n summations or multiplication of short integers. It is worth noticing that binary segmentation is not an approximate computing technique, since it guarantees exact computations, as the clustering width dimension already accounts for the number of bits needed to represent the computation output without introducing precision losses.

In the particular embodiment of the inner product computation, *after receiving two operands u, v, the method comprises the step of reverting the order of the elements of the operand v = [v_0, ..., v_{n-1}] to obtain an operand v' = [v_{n-1}, ..., v_0 ]*. This step is also advantageously applied to the computation of a linear convolution for convolutional neural networks (CNN).

The computation of the inner product, or dot product, of two vectors involves the reversion of the order of the elements of one operand, either u or v; the reversed operand v' is transformed as general case of the method, that is, zeroes are added to the left of the most significant bit, and the inner product is obtained from the multiplication of the resulting values U, V.

In the particular embodiment of the vector reduction, *each of the elements of operand v equals one:*

$$v_0 = \cdots = v_{n-1} = 1.$$

As mentioned above, the vector reduction is processed as a special case of the inner product via binary segmentation between u and v, with v being a unit vector composed only by elements equal to one. The result is reducing vector u, composed of n elements, to a scalar value holding the sum between all the elements of u.

In the particular embodiment of linear convolution, *the operation result w comprises one or more elements, w = [w_0, w_1, ... ], and wherein each element w_i comprises one or more bits of W according to:*

$$w_i = \left[W_{i \cdot c_w + (c_w - 1)}, ..., W_{i \cdot c_w}\right], with\ i \in \{0, ..., m+n-1\}.$$

In the method of the invention, once the values U, V have been multiplied, the product, W, must be transformed to obtain the operation result. For the linear convolution, the operation result is an array of elements, and each element comprises a set of bits of W; in particular, for linear convolution, each element $w_i$ comprises a set of $c_w$ consecutive bits of W, or conversely, if W is evenly divided into a number of sets of $c_w$ consecutive bits, $w_i$ comprises one of those sets, for instance, for wo:

$$w_0 = \left[W_{c_w - 1}, ..., W_0\right]$$

Which corresponds to the rightmost set of $c_w$ bits of W. The next element, $w_1$, would comprise the bits $W_{cw}$ to $W_{2 \cdot cw - 1}$, and so on. These elements are alternatively known as slices.

However, for operations other than linear convolution, the extraction of the result w is slightly different. In the particular embodiment of the computation of inner product and vector reduction, *the operation result w comprises one or more bits of W according to:*

$$w = \left[W_{c_w(m-1) + (c_w - 1)}, ..., W_{c_w(m-1)}\right].$$

For the inner product and the vector reduction, the extraction of the result involves extracting a set of $c_w$ consecutive bits from the value W starting from the $(m-1) \cdot c_w$-th bit of W, from the least significant bit, or in other words, a central slice of W.

Also, the method considers a particular embodiment of the computation of the product between a vector and a scalar, in which *n = 1 and v = [v_0 ] = [k]*.

For the computation of a vector and a scalar, the operands are construed respectively as a multi-element array and a single element array, which value corresponds to the scalar operand, or in other words, $m \geq 2$, n = 1.

The clustering width needs to be adapted accordingly, and that particular embodiment, *the clustering width fulfils the condition:*

$$c_w \geq b_u + log_2(m).$$

It has been stated that the method is also suitable for the computation of array additions and subtractions. For the addition or subtraction according to binary segmentation, *the clustering width fulfils the condition:*

$$c_w \geq max\,(b_u, b_v) + 1.$$

While the addition of two binary operands is straightforward, and can be computed by an adder, the subtraction of two operands implies computing the 2's complement of the subtracted operand. In the embodiment corresponding to a subtraction operation, *the method comprises the step of computing the 2's complement of the elements $v_0, \dots, v_{n-1}$ of operand v.*

The 2's complement, or two's complement, operation is an operation known in the field on binary numbers calculated by inverting the bits and adding one to the original binary number, and amounts to computing the negative of the original number; thus, the subtraction of two operands is computed as the addition of a first value and the negative of the second value.

For the addition and subtraction as well as for the scalar-vector product, *the operation result w comprises one or more elements, w = [$w_0$, $w_1$, ... ], and wherein each element $w_i$ comprises one or more bits of W according to:*

$$w_i = \left[W_{i \cdot c_w + (c_w - 1)}, \dots, W_{i \cdot c_w}\right], with\ i \in \{0, \dots, m-1\}.$$

This extraction process is analogue as the process for the linear convolution result extraction, differing only in the number of elements of the result w.

In a second inventive aspect, *the invention provides a digital circuit configured to execute the method according to the first inventive aspect, wherein the digital circuit comprises:*

> *a pre-processing unit, configured to receive and extend operands u, v, and to feed values U, V to an arithmetic-logic unit, and*
> *a post-processing unit, configured to receive a result value W from the arithmetic-logic unit and extract an operation result w.*

As discussed above, the method is intended to be executed by any digital circuit capable of performing the described transformations of the operands; such a digital circuit may be implemented by means of an assembly of interconnected conventional logic gates, or may be implemented by means of a purposefully built printed circuit board or integrated circuit. In all of the cases, the digital circuit may optionally be provided with an arithmetic logic and/or input and output connections and/or data storage means to feed, store and multiply or add the values, so as to create an integral binary segmentation computing unit configured to receive operands and output an operation result.

The digital circuit comprises two process-oriented units, a pre-processing unit and a post-processing unit, each one configured to carry out transformations before and after the addition or multiplication, respectively. Depending on the specific architecture of the digital circuit, some elements of the circuit may be shared between the pre-processing unit and the post-processing unit, or may be used in combination with other elements to perform one or more of the steps of the method.

In an embodiment of the digital circuit, the pre-processing unit comprises an extend unit, configured to extend the bit width of the elements of the operands to the clustering width, and a pack unit, configured to compress its input data into their actual data sizes by converting the elements of the operands into the target output bit width, and forwarding them to a mask unit to merge them. This mask unit is an element of the post-processing unit, and it is also configured to extract the relevant operation result w from the result value W. The digital circuit may further comprise a control unit with a control register, configured to determine the clustering widths and other key parameters according to the input operand bit widths and operation type.

In a particular embodiment, the circuit is *further configured to be operatively connected to an arithmetic-logic unit of a computer, and further configured to feed or receive values U, V, W to or from the arithmetic-logic unit through a register file, a by pass logic and/or a memory hierarchy.*

In this embodiment, the digital circuit is configured as an add-on, or connectable device, configured to be connected to a pre-existing processing unit or comparable computing element, so that the digital circuit may be advantageously retrofitted on any computer. In this embodiment, upon connection with the computer, the digital circuit loads the values U, V, resulting from the transformation of the input operands u, v, into the registers of the arithmetic-logic unit, possibly together with an instruction relative to the operation, and receives the result of the computation, W. The digital circuit may feed and receive these values through direct buses to the arithmetic-logic unit, or may feed and receive them through other elements, such as register files, by pass logic, or any type of data storage means, including any level of the memory hierarchy. In some processor architectures, for example, CPU's and GPU's, the digital circuit behaviour is managed by instructions specific to those architectures.

In a particular embodiment, *the pre-processing unit and the post-processing unit are implemented on a configurable logic block, CLB, wherein the CLB comprises registers and look up tables, LUT.*

A particularly advantageous application of the digital circuit are data flow computer architectures. Examples of data flow architectures on which the digital circuit may be applied are architectures implemented by field programable gate arrays (FPGA) comprising a plurality of programable logic units, or configurable logic blocks (CLB), interconnected through an interconnexion matrix. In those embodiments, the digital circuit may be built with one or more CLB and digital signal processing units DSP, and the pre-processing and post processing units are implemented by means of look up tables (LUT).

## DESCRIPTION OF THE DRAWINGS

The foregoing and other advantages and features will be more fully understood from the following detailed description of exemplary embodiments with reference to the accompanying drawings, which should be considered by way of illustration and not limitation, in which:

Figure 1a, 1b, 1c    These figures represent flow diagrams of three embodiments of the method.
Figure 2    This figure represents a diagram of a preferred example of the digital circuit.
Figure 3    This figure represents a diagram of another preferred example of the digital circuit implemented in a FGPA architecture.

## PREFERRED EMBODIMENT OF THE INVENTION

Throughout the present document it will be understood that various parts of one embodiment of the invention can be freely combined with parts described in other embodiments, even being said combination not explicitly described, provided there is no harm in such combination.

The method object of the present invention is directed to the implementation of a binary segmentation computation process for two array operands comprised of narrow bit width operands by means of a digital circuit. The method is capable of computing at least vector linear convolutions, inner products, vector reductions, scalar-vector products, or vector additions or subtractions; all these linear algebra operations are computed by means of a set of common steps (10, 20, 30, 40, 50), which differ from one type of operation to another in the clustering bit width of the elements of the operands, the result extraction procedure, and the specific computation by the arithmetic-logic unit (ALU), either an addition or a multiplication.

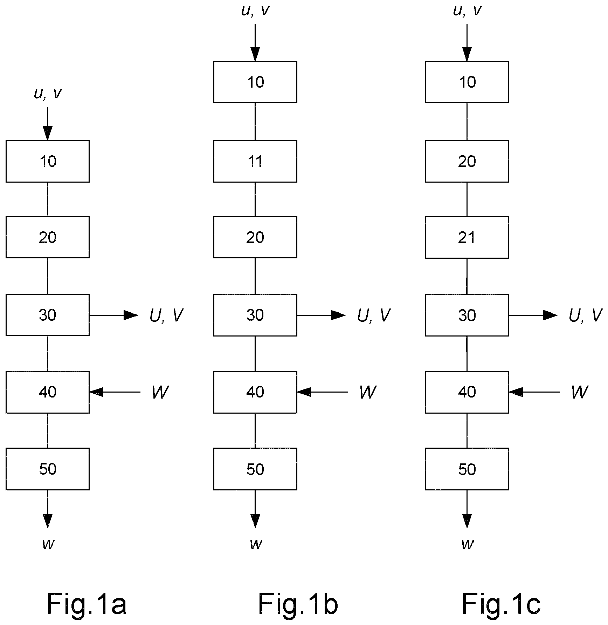

Figures 1a, 1b and 1c show three flow diagrams corresponding to three embodiments of the method. In general, the method may be divided into three phases:

- A pre-processing phase, comprising the steps of receiving (10) two operands u, v, composed of m, n narrow bit width elements, extending (20) the bit width of each element of the operands to a clustering bit width and feeding (30) the values U, V, to the arithmetic-logic unit.
- A compute phase, which is executed by the ALU; in this phase the values U and V are either added or multiplied, and outputted to the digital circuit.
- A post-processing phase, comprising the steps of receiving (40) a result value W and extracting (50) an operation result w.

Figure 1a shows a general case, valid for any operation, while Figure 1b shows the specific case of the computation of the inner product, and Figure 1c that of the computation of the subtraction.

In a first step, the digital circuit receives (10) two operands, u, v, for example two vectors, with m and n elements, or components, respectively:

$$u = [u_0, ..., u_{m-1}], \qquad v = [v_0, ..., v_{n-1}]$$

If the operation of choice is the inner product, the digital circuit needs to revert (11) the order of the elements of the second vector, as follows:

$$v' = [v_{n-1}, \dots, v_0]$$

Convolutional neural networks (CNN) apply a type of linear convolution which can be also computed with the method of the present invention; this operation is calculated in the same way as the general case of linear convolution, but differs in that the order of the elements of one of the vectors is reverted (11) as in the case for the calculation of the inner product.

The next step requires the digital circuit to extend (20) the bit width of each element of both vectors to a clustering width, $c_w$. The target clustering width is achieved by adding zeroes to the left of the most significant bit, and the clustering width is defined so as to space the elements in the concatenated value (U or V), and avoid overflows in the computation. The clustering width, $c_w$, is an integer fulfilling the condition:

$$c_w \geq max(b_u, b_v)$$

Where $b_u$, $b_v$, are the bit widths of the elements of u and v, respectively. To better exploit the benefits of the binary segmentation, the clustering width needs to be the smallest possible integer that provides enough separation between the components of the vectors, and this in turn depends on the operation. In summary, for each operation, the clustering width is the smallest integer fulfilling the condition:

- For linear convolution, inner product and vector reduction:

$$c_w \geq b_u + b_v + log_2(max(m, n))$$

- For vector-scalar product:

$$c_w \geq b_u + \log_2(m)$$

- For addition or subtraction:

$$c_w \geq \max(b_u, b_v) + 1$$

It is apparent that certain operations require the same number of elements for both operands, or vectors; in such cases, it follows that m = n. Also, in the case of the scalar-vector product, the scalar operand is considered as an array with a single element with the value of the scalar, k, and the rest of the process does not change.

Moreover, if the operation of choice is a subtraction, the digital circuit computes (21) the two's complement of the elements of the subtracted vector, in this case, v, after expanding (20) to the clustering width.

After expanding the elements to a normalized clustering width, the digital circuit concatenates the elements to obtain two values U, V, of bit widths $c_w \cdot m$ and $c_w \cdot n$, respectively. When the operation is a subtraction or an inner product, the second vector v is transformed as explained above, and then expanded and concatenated as in the general case.

The two values U, V, are then fed (30) to the ALU, possibly together with a signal indicating the type of operation, namely a multiplication or addition, and then returned to the digital circuit, which receives (40) the result value W. The type of operation is a multiplication, except for subtractions and additions, in which case, the values U, V, are added.

The result value W is a binary integer of p bits; the size of p depends on whether U and V are added or multiplied and the bit widths of U and V. If W is written as an array of bits:

$$W = [W_0, \dots, W_{p-1}]$$

the extraction (50) step requires the digital circuit to set apart or somehow output a subset of bits of W. The specific set of bits will depend on the type of operation, and is summarized as follows:

For linear convolution the result of the operation w is an array or vector, and each element $w_i$ of the array, or slice, is defined as:

$$w_i = \left[W_{i \cdot c_w + (c_w - 1)}, \ldots, W_{i \cdot c_w}\right], with\ i \in \{0, \ldots, m + n - 1\}$$

A similar principle applies to the scalar vector product, the addition and subtraction, with the difference of the number of components of w:

$$w_i = \left[W_{i \cdot c_w + (c_w - 1)}, \ldots, W_{i \cdot c_w}\right], with\ i \in \{0, \ldots, m - 1\}$$

Finally, for inner product and vector reduction the result of the operation comprises a single slice of the result value W:

$$w = \left[W_{c_w(m-1) + (c_w - 1)}, \ldots, W_{c_w(m-1)}\right]$$

The following numerical examples shows two implementations of the method with specific numerical values.

*Example 1: inner product*

Operands: u = (7,5); v = (4,2)
Clustering width: $c_w$ = 7

$7_{10}$ = $111_2$; $5_{10}$ = $101_2 \rightarrow$ u = ($u_0$, $u_1$) = (111, 101)
$4_{10}$ = $100_2$; $2_{10}$=$010_2 \rightarrow$ v = ($v_0$, $v_1$) = (100, 010) $\rightarrow$ v' = ($v_1$, $v_0$) = (010, 100)
$u_{cw}$ = (0000111, 0000101) $\rightarrow$ U = [00001110000101]
$v_{cw}$ = (0000111, 0000101)$\rightarrow$ V = [00001110000101]
W = U·V = [000111001001100010100]
w = [$W_{(2 \cdot cw) - 1}$, ..., $W_{1 \cdot cw}$] = [$W_{13}$, ..., $W_7$] = [0100110]
$\rightarrow$ **w = $0100110_2$ = $38_{10}$**

*Example 2: linear convolution*

Operands: u = (3,1,2); v = (1,2)
Clustering width: $c_w$ = 5

$3_{10}$ = $011_2$; $1_{10}$ = $001_2$; $2_{10}$=$010_2 \rightarrow$ u = ($u_0$, $u_1$, $u_2$) = (011, 001, 010)
$1_{10}$ = $001_2$; $2_{10}$=$010_2 \rightarrow$ v = ($v_0$, $v_1$) = (001, 010)
$u_{cw}$ = (00011, 00001, 00010) $\rightarrow$ U = [000110000100010]
$v_{cw}$ = (00001, 00010)$\rightarrow$ V = [0000100010]
W = U·V = [000110011100010000100]
w = ($w_0$, ..., $w_i$, ...$w_3$) = [$W_{(i \cdot cw) + (cw - 1)}$, ..., $W_{i \cdot cw}$] = (00011, 00111, 00100, 00100)
$\rightarrow$ **w = (00011, 00111, 00100, 00100)$_2$ = (3, 7, 4, 4)$_{10}$**

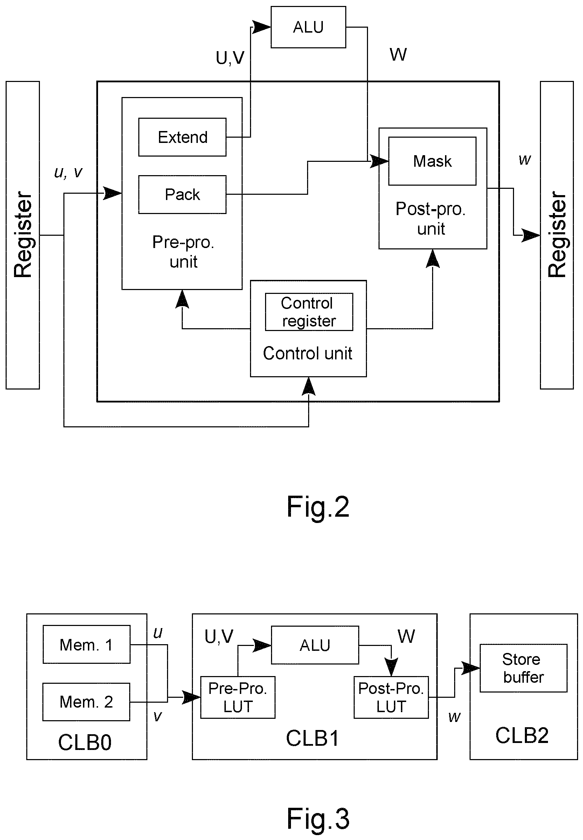

Regarding the digital circuit, in a preferred example, shown in Figure 2, the digital circuit is implemented as a RISC (Reduced Instruction Set Computer) instruction set architecture integrated on a system on a chip (SoC), for a conventional central processing unit (CPU). For example, the RISC-V vector extension v1.0 has deprecated its support for narrow single instruction multiple data (SIMD) computations, and its initial specifications only accounted for 8-bit, 4-bit, 2-bit, and 1-bit data types. As opposed to standard SIMD units, the digital circuit allows many data sizes to be kept compressed in memory, and computed in a SIMD fashion, without incurring data manipulation related area overheads. The digital circuit also features mixed-precision computation support by design, as the clustering widths already account for different data sizes between the data sources. Thus, the digital circuit is capable of computing compressed data and perform flexible SIMD-style computations, whose width is proportional to the data size of every operation operand, without associated overheads. Moreover, implementing the digital circuit, whose key novelty relies on hardware reutilization, does not require any additional data path, or a separate register file or functional unit, leading to a negligible area and power overheads.

The digital circuit relies on standard arithmetic-logic units (e.g., integer multipliers), whose data paths and implementations are already implemented in processors supporting integer computations. Thus, the principal aim of the digital circuit is to efficiently cluster data before the multiplication, and to optimize the data extraction on the multiplier output side. The digital circuit tackles these problems by means of two units, called pre-processing and post-processing. The pre-processing unit functionality is twofold. The extend unit converts the elements belonging to the operands into the input values U, V, and forwards them to the processor multiplier through output busses to perform the actual computation. The number of elements to be clustered, as well as the bit widths, are specified in the control register. Then, the multiplication or addition result is processed by the mask unit, that composes the final result depending on the type of operation. Specifically, the mask unit extracts a set of bits w of value W according to their position, as defined by the binary segmentation technique.

To speed-up the data compression phase, the pre-processing unit comprises a pack unit, which compresses its input data into their actual data sizes. The pack unit converts the operand elements into the target output bit width, and forwards them to the mask unit for merging. Therefore, the post-processing unit acts either as a filter to extract the meaningful slice of data from the arithmetic-logic unit output, or it is used to compress data, wherein its behaviour depends on the type of operation, as well as on the values set in the control register.

In other embodiments, the digital circuit is applied to a data flow computer architecture; in the example shown in Figure 3, the digital circuit is implemented on a FPGA architecture. FPGA's are composed by data flow blocks, known as CLB's, each block comprising logic circuits such as, ALU's, memory units and/or LUT's, which are a hardware component specialized in implementing logic units such shifts, Boolean operations, etc.; the CLB's are interconnected through an interconnection matrix, and are capable of receiving and sending data to a neighbouring block.

In such example, three CLB's have been connected as a chain, and the first CLB of the chain (CLB0) comprises two memory units that output two new vectors of elements on every clock cycle. The central block of the chain (CLB1), uses an internal ALU as a multiplier, and its LUT's as logic circuits to implement the pre-processing and the post-processing units of the digital circuit, in other examples, the ALU is an external implemented with a DSP. Thus, the two source vectors from the CLB0 are processed by the extend unit of the pre-processing unit to obtain the input clusters, multiplied by the ALU to obtain W, and processed by the mask unit of the post-processing unit to extract one operation result on every cycle. Each result is then stored in a store buffer on a third block (CLB2).

## Claims

1. Method for the computation of a linear algebra operation of two operands u, v, by means of a digital circuit operatively connected to an arithmetic-logic unit; wherein the method comprises, by the digital circuit, the steps of:

   receiving (10) two operands u, v, composed of m, n narrow bit width elements, respectively, such *that u =* $[u_0,...,u_{m-1}]$, $v = [v_0, ..., v_{n-1}]$, the elements having bit widths $b_u$, $b_v$, respectively,
   extending (20) the bit width of each element of the operands to a clustering bit width $c_w$ by adding zeroes to the left of the most significant bit of the element, and concatenating the elements of each operand to obtain the values U, V, of bit widths $c_w \cdot m$ and $c_w \cdot n$, respectively, wherein the clustering width fulfils the condition:

   $$c_w \geq max\,(b_u, b_v)$$

   feeding (30) the values U, V, to the arithmetic-logic unit,
   receiving (40) a result value W of bit width p from the arithmetic-logic unit, $W = [w_0, ..., W_{p-1}]$,
   extracting (50) an operation result w from the result value W, wherein the operation result w comprises one or more bits of W.

2. Method according to the previous claim, wherein the value W from the arithmetic-logic unit is obtained by multiplying, or adding the values U and V.

3. Method according to any of the previous claims, wherein the clustering width fulfils the condition:

$$c_w \geq b_u + b_v + log_2(max(m,n)).$$

4. Method according to the previous claim, wherein after receiving (10) two operands u, v, the method comprises the step of reverting (11) the order of the elements of the operand $v = [v_0, ..., v_{n-1}]$ to obtain an operand $v' = [v_{n-1}, ..., v_0]$.

5. Method according to claim 3, wherein each of the elements of operand v equals one:

$$v_0 = \cdots = v_{n-1} = 1.$$

6. Method according to any of previous claims, wherein the operation result w comprises one or more elements, w = $[w_0, w_1, ...]$, and wherein each element $w_i$ comprises one or more bits of W according to:

$$w_i = \left[W_{i \cdot c_w + (c_w - 1)}, ..., W_{i \cdot c_w}\right], with\ i \in \{0, ..., m + n - 1\}.$$

7. Method according to any of claims 4-5, wherein the operation result w comprises one or more bits of W according to:

$$w = \left[W_{c_w(m-1)+(c_w-1)}, ..., W_{c_w(m-1)}\right].$$

8. Method according to any of claims 1-2, wherein the clustering width fulfils the condition:

$$c_w \geq b_u + \log_2(m).$$

9. Method according to the previous claim, wherein, $n = 1$ and $v = [v_0] = [k]$.

10. Method according to any of previous claims 1-2, wherein the clustering width fulfils the condition:

$$c_w \geq \max(b_u, b_v) + 1.$$

11. Method according to the previous claim, wherein, after the step of extending (20) the bit width of each element, the method comprises the step of computing (21) the 2's complement of the elements $v_0, ..., v_{n-1}$ of operand v.

12. Method according to any of claims 10-11, wherein the operation result w comprises one or more elements, w = $[w_0, w_1, ...]$, and wherein each element comprises one or more bits of W according to:

$$w_i = \left[W_{i \cdot c_w + (c_w - 1)}, ..., W_{i \cdot c_w}\right], with\ i \in \{0, ..., m - 1\}.$$

13. Digital circuit configured to execute the method according to any of claims 1-12, wherein the digital circuit comprises:

   a pre-processing unit, configured to receive (10) and extend (20) operands u, v, and to feed (30) values U, V to an arithmetic-logic unit, and
   a post-processing unit, configured to receive (40) a result value W from the arithmetic-logic unit and extract (50) an operation result w.

14. Digital circuit according to previous claim, further configured to be operatively connected to an arithmetic-logic unit of a computer, and further configured to feed (30) or receive (40) values U, V, W to or from the arithmetic-logic unit through a register file, a by pass logic and/or a memory hierarchy.

15. Digital circuit according to claim 13, wherein the pre-processing unit and the post-processing unit are implemented on a configurable logic block, CLB, wherein the CLB comprises registers and look up tables, LUT.

*u, v*

```
┌──────┐
│  10  │
└──────┘
   │
┌──────┐
│  20  │
└──────┘
   │
┌──────┐
│  30  │ ──→ U, V
└──────┘
   │
┌──────┐
│  40  │ ←── W
└──────┘
   │
┌──────┐
│  50  │
└──────┘
   │
   w
```

Fig.1a

*u, v*

```
┌──────┐
│  10  │
└──────┘
   │
┌──────┐
│  11  │
└──────┘
   │
┌──────┐
│  20  │
└──────┘
   │
┌──────┐
│  30  │ ──→ U, V
└──────┘
   │
┌──────┐
│  40  │ ←── W
└──────┘
   │
┌──────┐
│  50  │
└──────┘
   │
   w
```

Fig.1b

*u, v*

```
┌──────┐
│  10  │
└──────┘
   │
┌──────┐
│  20  │
└──────┘
   │
┌──────┐
│  21  │
└──────┘
   │
┌──────┐
│  30  │ ──→ U, V
└──────┘
   │
┌──────┐
│  40  │ ←── W
└──────┘
   │
┌──────┐
│  50  │
└──────┘
   │
   w
```

Fig.1c

Fig.2

Fig.3

Europäisches
Patentamt

European
Patent Office

Office européen
des brevets

# EUROPEAN SEARCH REPORT

Application Number

EP 22 38 2173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 602 888 A1 (XEROX CORP [US]) 22 June 1994 (1994-06-22) * column 6, line 50 - column 7, line 50 * * column 10, line 50 - column 13, line 44; figure 7 * * column 15, line 39 - line 53 * | 1-15 | INV. G06F7/544 |
| A | EP 0 486 143 A2 (IBM [US]) 20 May 1992 (1992-05-20) * page 2, line 40 - page 4, line 8; figure 2 * | 1-15 | |
| A | Yao Fu ET AL: "Deep Learning with INT8 Optimization on Xilinx Devices", White Paper: UltraScale and UltraScale+ FPGAs, 24 April 2017 (2017-04-24), pages 1-11, XP055493137, Retrieved from the Internet: URL:https://www.xilinx.com/support/documentation/white_papers/wp486-deep-learning-int8.pdf [retrieved on 2018-07-17] * page 2 - page 5; figure 3 * | 1-15 | |

TECHNICAL FIELDS SEARCHED (IPC)

G06F

The present search report has been drawn up for all claims

| Place of search | Date of completion of the search | Examiner |
|---|---|---|
| Munich | 26 July 2022 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 2173

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2022

| Patent document cited in search report | | Publication date | Patent family member(s) | | Publication date |
|---|---|---|---|---|---|
| EP  0602888 | A1 | 22-06-1994 | DE | 69326314  T2 | 24-02-2000 |
| | | | EP | 0602888  A1 | 22-06-1994 |
| | | | JP | H06222908  A | 12-08-1994 |
| | | | US | 5408670  A | 18-04-1995 |
| EP  0486143 | A2 | 20-05-1992 | EP | 0486143  A2 | 20-05-1992 |
| | | | JP | 2601960  B2 | 23-04-1997 |
| | | | JP | H05204605  A | 13-08-1993 |
| | | | US | 5909552  A | 01-06-1999 |

EPO FORM P0459

For more details about this annex : see Official Journal of the European Patent Office, No. 12/82